# EUROPÄISCHE PATENTSCHRIFT

(11) **EP 1 353 544 B1**
(45) Veröffentlichungstag und Bekanntmachung des Hinweises auf die Patenterteilung: **13.09.2006**
(21) Anmeldenummer: 02700153.6
(22) Anmeldetag: 17.01.2002
(51) Int. Cl.: A01D 45/02

(54) **SCHNEID- UND FÖRDERVORRICHTUNG FÜR EIN REIHENUNABHÄNGIG ARBEITENDES SCHNEIDWERK**
CUTTING AND TRANSPORT DEVICE FOR A LINE-INDEPENDENT CUTTING TOOL
DISPOSITIF DE COUPE ET DE TRANSPORT POUR UNE BARRE DE COUPE TRAVAILLANT INDEPENDAMMENT DES LIGNES

(30) Priorität: 26.01.2001 DE 10103595
(43) Veröffentlichungstag der Anmeldung: 22.10.2003
(73) Patentinhaber: CNH Belgium N.V., 8210 Zedelgem (BE)
(72) Erfinder: VON ALLWÖRDEN, Wilhelm, 01326 Dresden (DE); PORSCHE, Andreas, 01169 Dresden (DE); BERNHARDT, Gerd, 01728 Hänichen (DE)
(74) Vertreter: Feldkamp, Rainer
(86) Internationale Anmeldenummer: PCT/DE2002/000134
(87) Internationale Veröffentlichungsnummer: WO 2002/058456

(56) Entgegenhaltungen:
- EP-A- 0 673 594
- EP-A- 0 824 856
- EP-A- 1 106 047
- DE-A- 19 615 882
- US-A- 4 594 842

## Beschreibung

Die Erfindung betrifft eine Schneid- und Fördervorrichtung für ein reihenunabhängig arbeitendes Schneidwerk für stängeliges Halmgut, insbesondere Mais.

Aus der Vielzahl der bisher bekannt gewordenen Lösungen für die gattungsgemässen Schneid- und Fördervorrichtungen, die sowohl zur Ernte von reihenabhängig als auch reihenunabhängig angepflanztem stängeligem Halmgut geeignet sind, haben sich in der Praxis bisher nur zwei Ausführungsvarianten erfolgreich durchgesetzt.

Die erste ist in der EP 0 099 527 B1 beschrieben, bei der zur Beschickung beispielsweise eines Häckselaggregates eines Feldhäckslers wenigstens zwei rotierende Schneid- und Fördervorrichtungen in einem Schneidwerk zum Einsatz kommen, das am Feldhäcksler frontseitig angebaut ist und in dem die Schneid- und Fördervorrichtungen quer zu dessen Fahrtrichtung nebeneinander angeordnet sind. Sie bestehen aus je einem als geschlossenen Hohlkörper ausgebildeten Rotationskörper, die um annähernd vertikal ausgerichtete Achsen umlaufen. An ihren äußeren Umfangsflächen sind in wenigstens zwei Ebenen übereinander sich radial erstreckende Mitnehmer in Form von Förderzinken befestigt, die zum Erfassen und Weitertransport der abgeschnittenen Halmgutstängel dienen. Dabei werden die Halmgutstängel in den Fördertaschen zwischen benachbarten Förderzinken aufgenommen und bis zu einer Abgabestelle im hinteren Bereich der Schneid- und Fördervorrichtung gefördert. Um die Halme während des Transports in den Fördertaschen festzuhalten und diese so weit wie möglich auf deren Grund zu drücken, sind an den stationären Halmteilerspitzen jeder Schneid- und Fördervorrichtung Führungsteile befestigt, die in den Bereich der Förderzinken hinein ragen und sich in Umfangsrichtung der Rotationskörper erstrecken. Zum Abschneiden der Halmgutstängel sind die Rotationskörper an ihrer Unterseite mit einer entsprechenden Anzahl von Schneidmessern ausgestattet, die mit mehreren feststehenden und somit Schnittstellen definierenden Gegenmessern zusammenwirken.

Im Unterschied zu der vorstehend beschriebenen Ausführungsvariante enthält die EP 0 099 527 B1 noch eine bezüglich der Schneidvorrichtung abgewandelte Version. Hier befindet sich unter jedem Rotationskörper eine unabhängig von diesem und mit wesentlich höherer Umfangsgeschwindigkeit angetriebene Schneidscheibe, die die Halmgutstängel nach Art eines Rotormähers im freien Schnitt abtrennt.

Dieser Schneid- und Fördervorrichtung haften jedoch in beiden Ausführungsversionen einige entscheidende Nachteile an. Einmal wird die Schnittbreite jeder Schneid- und Fördervorrichtung durch die Führungsteile in mehrere Arbeitsbereiche mit definierten Schnittstellen unterteilt, so dass zum einen aktive Schnittbreite verloren geht und zum anderen die Stängel, die nicht gerade in den Schneidspalt zwischen den Halmteilerspitzen einlaufen, abgedrückt und demzufolge schräg abgeschnitten werden. Weiterhin sind die Herstellungskosten für eine derartige Schneid- und Fördervorrichtung wegen der komplizierten Antriebe und der großen Zahl von Führungsteilen sehr hoch. Schließlich weist dieses aus mehreren Schneid- und Fördervorrichtungen zusammengesetzte Schneidwerk aus vorstehend genannten Gründen auch ein hohes Gewicht auf, was sich insbesondere sehr negativ auf das Fahrverhalten einer Erntemaschine bei größeren Arbeitsbreiten auswirkt.

Die zweite praxiswirksame Ausführungsvariante einer Schneid- und Fördervorrichtung ist mit der DE 196 15 882 A1 bekannt geworden, von denen wenigstens zwei unter Zwischenschaltung eines großen Halmteilers zu einem reihenunabhängig arbeitenden Schneidwerk zur Ernte von stängeligem Halmgut, insbesondere Mais, zusammengesetzt werden können. Dabei besteht jede Schneid- und Fördervorrichtung aus einer annähernd senkrecht ausgerichteten Rotorwelle, die über Getriebe und Gelenkwellen angetrieben wird. Ganz unten an der Rotorwelle ist eine Schneidscheibe befestigt und koaxial dazu und in entsprechenden Abständen darüber eine untere und eine obere Förderscheibe. Am äußeren Umfang der Förderscheiben befinden sich gleichmäßig voneinander beabstandete Förderzinken, wobei die Freiräume zwischen ihnen als Fördertaschen zur Aufnahme abgeschnittener Halmgutstängel ausgebildet sind. Jeder Schneid- und

Fördervorrichtung ist mittig ein kleiner als Stängelheber fungierender stationärer Halmteiler zugeordnet, der über eine spezielle Stütze am das die Rotorwelle antreibenden Getriebe befestigt ist. An seinem rückwärtigen Ende befindet sich auch hier ein Führungsteil, das anfangs radial und anschließend mit einer Krümmung zur Drehrichtung der Förderscheiben hin ausgerichtet ist und das bis in den Bereich der Förderzinken bzw. der Fördertaschen hinein ragt.

Zur Anordnung der Förderzinken ist noch zu erwähnen, dass die Förderzinken der oberen Förderscheibe gegenüber denen der unteren Förderscheibe um ein geringes Maß auf deren Drehrichtung bezogen vorlaufen, was die Einzugsrichtung der unteren Teile der Halmgutstängel besser auf die Einzugsöffnung eines Häckselaggregates eines Feldhäckslers lenken soll. Die Ausbildung der Fördertaschen in beiden Förderscheiben in einer Kontur von mindestens zwei Haltekammern soll bewirken, dass die Halmgutstängel möglichst in deren Grund beim Weitertransport verharren, um Platz für später abgeschnittene Stängel zu haben. Dass diese Maßnahme nicht die gewünschte Wirkung gebracht hat ist dadurch bewiesen, weil an diesen Schneid- und Fördervorrichtungen nicht auf vorstehend beschriebene Führungsteile verzichtet werden kann. Diese unverzichtbaren Führungsteile und die auch hier für den Antrieb der Schneidscheibe notwendigen Antriebselemente führen, wenn auch im Vergleich mit der Schneid- und Fördervorrichtung nach der EP 0 099 527 B1 in einer etwas abgeschwächten Form, letztendlich zu den gleichen Nachteilen.

Deshalb liegt der Erfindung die Aufgabe zugrunde, eine Schneid- und Fördervorrichtung für stängeliges Halmgut zu schaffen, die eine maximal mögliche aktive Schnittbreite bietet, die kostengünstig in der Herstellung ist und die ein geringes Gewicht aufweist.

Diese Aufgabe wird gemäß der Erfindung mit den Merkmalen nach dem Patentanspruch 1 gelöst, wobei in den Unteransprüchen Merkmale aufgeführt sind, die diese Lösung in vorteilhafter Weise weiterentwickeln.

Durch die Verwendung einer lagefixierten Schneidscheibe gepaart mit einer Vielzahl von an der rotierenden unteren Förderscheibe angebrachten Greifschneiden steht praktisch über die gesamte Schnittbreite der Schneid- und Fördervorrichtung eine unbegrenzte Anzahl von Schneiden- Gegenschneiden- Paarungen zur Verfügung. Die lang ausgebildeten und den Außendurchmesser der Schneidscheibe überragenden Greifschneiden dienen dazu, die Halmgutstängel schon vor dem Schneiden sicher zu halten und anschließend zur Schneidscheibe zu leiten. Nach dem Abschneiden stützen sich die Stängel beim Weitertransport bis zu ihrer hinteren Abgabestelle mit ihren unteren Enden auf der Schneidscheibe ab. Die annähernd in Drehrichtung der unteren Förderscheibe ausgerichteten Greifschneiden verdecken einerseits die zwischen den benachbarten Greifschneiden liegenden Fördertaschen, so dass deren Öffnungen ebenfalls in genannte Drehrichtung weisen, wodurch das vorstehend erwähnte Festhalten der Stängel gewährleistet ist. Andererseits ist dadurch zwischen den fördernden Flanken der Greifschneiden und der Schneide der Schneidscheibe ein so kleiner Schneidenwinkel entstanden, der das Schneiden von so dicken Halmgutstängeln mit einer feststehenden Schneidscheibe erst möglich macht.

Damit die Halmgutstängel auch während ihres Weitertransports in einer solchen Position gehalten werden, damit sie mit ihren unteren Enden beispielsweise zu einem Häckselaggregat gelangen, befindet sich in einem bestimmten Abstand über der unteren Förderscheibe wenigstens noch eine mit dieser rotierende weitere Förderscheibe. Deren Förderzinken und Fördertaschen sind in den Konturen und bezüglich der Anordnung identisch mit den Greifschneiden und den Fördertaschen in der unteren Förderscheibe, um genanntes Festhalten der Stängel am wirksamsten zu realisieren.

In einer zweckmäßigen Ausgestaltung der Erfindung nach dem Unteranspruch 2 hat die Schneide der Schneidscheibe zur Erhöhung ihrer Aggressivität und damit ihrer Schneidleistung eine profilierte oder sägezahnartige Gestalt.

Zur Vergrößerung der Angriffsfläche der fördernden Flanken der Greifschneiden hat es sich nach der Ausführung im Unteranspruch 3 bewährt, auf diesen über ihre ganze Länge aufrecht stehende Bleche anzubringen.

In einer bevorzugten Ausführung der Erfindung nach dem Unteranspruch 4 verhindern die derart angebrachten Hakenbleche ein Herausgleiten der Halmgutstängel aus den Fördertaschen.

Damit Halmgutstängel, Maiskolben oder Schmutz nicht in den Innenraum der Schneid- und Fördervorrichtung eindringen können, ist es nach den Merkmalen im Unteranspruch 5 von Vorteil, wenigstens die untere Förderscheibe mit einem zylinderförmigen Mantel auszustatten, der von oben abgedeckt ist.

In einer weiteren zweckmäßigen Ausgestaltung der Erfindung nach dem Unteranspruch 6 wird der Einsatz einer dritten oberen Förderscheibe vorgeschlagen, die ebenfalls mit Förderzinken in Form von Mitnehmern und dazwischen liegenden Fördertaschen ausgestattet ist.

Nach dem Merkmal im Unteranspruch 8 ist es jedoch vollkommen ausreichend, den Mitnehmern eine trapezförmige und damit kostengünstig herstellbare Gestalt zu geben.

Schließlich hat es sich nach den Merkmalen im Unteranspruch 7 bewährt, die Greifschneiden der unteren Förderscheibe, die Förderzinken der mittleren Förderscheibe und die Mitnehmer der oberen Förderscheibe in dieser Reihenfolge auf ihre Drehrichtung bezogen nacheilend anzuordnen. Dadurch werden die Stängel schon unmittelbar nach dem Schnitt mit ihren unteren Enden in Richtung der hinteren Abgabestelle am Schneidwerk geneigt, wodurch deren Weiterleitung an eine Querförderschnecke oder ein Häckselaggregat noch mehr als bisher beschrieben begünstigt wird.

An dieser Stelle wird vorsorglich zum beanspruchten Schutzumfang dieser Erfindung darauf hingewiesen, dass alle die Schneidwerke im Schutzumfang dieser Erfindung liegen, die mit erfindungsgemäß ausgebildeten Schneid- und Fördervorrichtungen ausgestattet sind. Dabei ist deren Anzahl sowie auch deren Drehrichtung völlig unbedeutend. Außerdem wird klargestellt, dass trotz der durchgängigen Verwendung des Begriffes "Förderscheiben" selbstverständlich auch solche Lösungen im Rahmen des Schutzumfanges dieser Erfindung liegen, die beispielsweise einen oder auch mehrere rotierende zylinderförmige Hohlkörper verwenden, an deren Umfang erfindungsgemäß gestaltete Förderscheibensegmente befestigt sind etc.

Damit ergeben sich zusammengefasst als Vorteile für diese Schneid- und Fördervorrichtung, dass sie eine maximal mögliche Schnittbreite über ihre gesamte Vorderfront bietet. Durch die sehr einfache Antriebsgestaltung infolge der lagefixierten Schneidscheibe und wegen des Fehlens von irgendwelchen Führungsteilen ist sie kostengünstig in der Herstellung und hat dadurch auch nur ein geringes Gewicht.

Die Erfindung soll nun anhand eines Ausfünrungsbeispieles näher erläutert werden, wobei die einzelnen Figuren zeigen:
- Fig. 1:: eine perspektivische Ansicht von schräg vorn und oben auf ein Schneidwerk mit vier Schneid- und Fördervorrichtungen
- Fig. 2:: ein vergrößerter Ausschnitt aus einer Schneid- und Fördervorrichtung nach Fig. 1
- Fig. 3:: eine Draufsicht von Fig. 2
- Fig. 4:: eine vereinfachte Seitenansicht "A" auf das Schneidwerk nach Fig. 1.

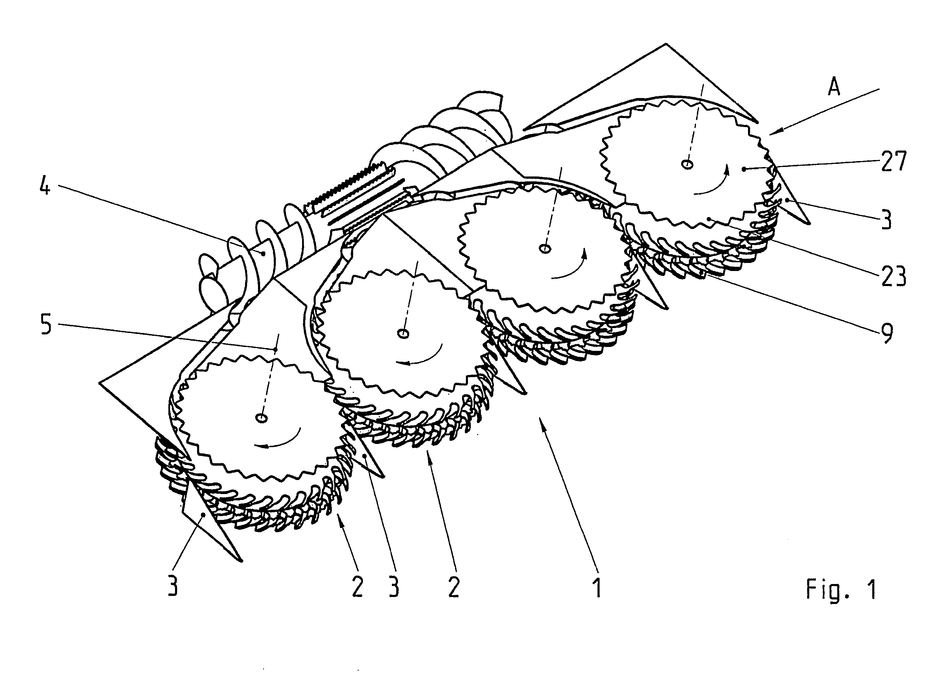

In Figur 1 ist ein Schneidwerk 1 zur reihenunabhängigen Ernte von Mais gezeigt, das in diesem Ausführungsbeispiel aus vier nebeneinander angeordneten und quer zur Fahrtrichtung eines nicht dargestellten Feldhäckslers ausgerichteten Schneid- und Fördervorrichtungen 2 besteht. Zwischen ihnen und am linken und rechten Rand des Schneidwerks 1 sind herkömmliche Halmteiler 3 angebracht. Hinter den Abgabebereichen der Schneid- und Fördervorrichtungen 2 ist eine Querförderschnecke 4 zum Zusammenführen des stängeligen Halmgutes zur Mitte des Schneidwerks 1 und zu dessen Weiterleitung an den Feldhäcksler angeordnet. Alle Schneid- und Fördervorrichtungen 2 rotieren um annähernd vertikal ausgerichtete Achsen 5, wobei die beiden Schneid- und Fördervorrichtungen 2 in der linken Schneidwerkshälfte und die in der rechten Schneidwerkshälfte die gleiche Drehrichtung haben, zueinander aber entgegengesetzt ausgerichtet sind.

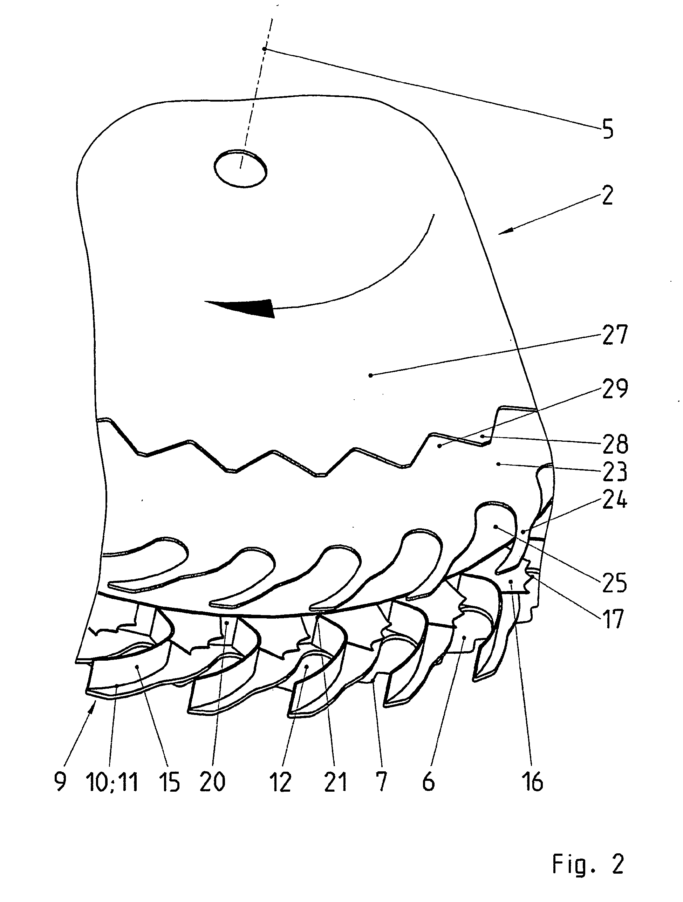

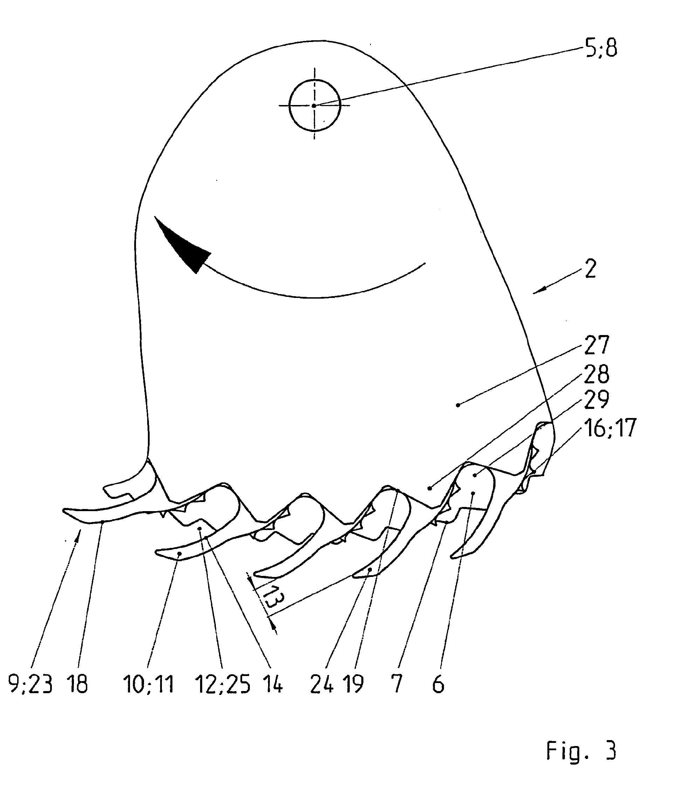

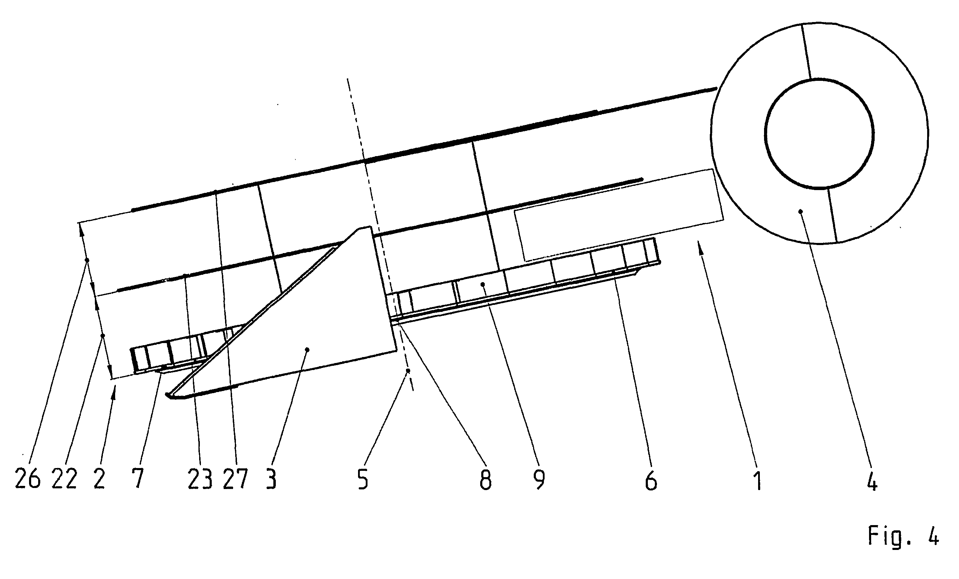

Der konstruktive Aufbau der Schneid- und Fördervorrichtungen 2 ist im Detail am besten in den Figuren 2 bis 4 zu sehen. Der prinzipielle Aufbau aller Schneid- und Fördervorrichtungen 2 von unten nach oben gesehen ist grundsätzlich gleich. Der einzige Unterschied zwischen denen in der linken und der rechten Schneidwerkshälfte besteht in deren spiegelbildlicher Gestaltung. Ganz unten befindet sich eine kreisförmige Schneidscheibe 6, deren Schneide 7 eine profilierte bzw. eine sägezahnartige Kontur aufweist und die in einer annähernd horizontalen Ebene am Rahmen des Schneidwerks 1 lagefixiert befestigt ist. Durch deren Mittelpunkt 8 erstreckt sich im rechten Winkel zur Schneidscheibe 6 die annähernd vertikal ausgerichtete Achse 5.

Direkt über der Schneidscheibe 6 und im Abstand eines Schneidspaltes zu ihr ist eine untere Förderscheibe 9 angeordnet, die um den Mittelpunkt 8 der Schneidscheibe 6 drehbar aufgehängt ist. An deren Umfang befinden sich gleichmäßig verteilte Förderzinken 10, die als sogenannte Greifschneiden 11 ausgebildet sind und die den Außendurchmesser der Schneidscheibe 6 überragen. Die Räume zwischen benachbarten Greifschneiden 11 fungieren als Fördertaschen 12 zur Aufnahme der abgeschnittenen Halmgutstängel.

Die relativ langen und schlanken Greifschneiden 11 weisen so in die Drehrichtung der unteren Förderscheibe 9, dass sie in radialer Richtung der unteren Förderscheibe 9 gesehen die auf ihre Drehrichtung bezogenen jeweils vor ihnen liegenden Fördertaschen 12 verdecken. Die Öffnungen 13 der Fördertaschen 12 zeigen dabei etwa in Drehrichtung der unteren Förderscheibe 9. Auf den fördernden Flanken 14 der Greifschneiden 11 sind aufrecht stehende Bleche 15 befestigt, so dass sie den Konturen der Fördertaschen 12 in diesem Abschnitt folgen. Schließlich sind entlang der Oberkante der aufrecht stehenden Bleche 15 parallel zur Schneidscheibe 6 ausgerichtete Hakenbleche 16 so angebracht, dass deren mit Haken 17 besetzte Kanten den Konturen der nicht fördernden Flanken 18 der Greifschneiden 11 im Bereich vom Grund 19 der Fördertaschen 12 bis etwa zur Schneide 7 der Schneidscheibe 6 reichend folgen. Am Grund 19 der Fördertaschen 12 der unteren Förderscheibe 9 ist noch ein auf dieser aufrecht stehender zylinderförmiger Mantel 20 angeordnet, dessen Radius bis zu den inneren Kanten 21 der Bleche 15 reicht, der sich in der Höhe wenigstens bis zur Oberkante der Bleche 15 erstreckt und der in seiner oberen Ebene geschlossen ist.

In einem deutlich sichtbaren Abstand 22 über der unteren Förderscheibe 9 befindet sich eine koaxial zu ihr angeordnete und gemeinsam mit ihr rotierende weitere Förderscheibe 23, deren Förderzinken 24 und Fördertaschen 25 in der Kontur und in der Anordnung mit den Greifschneiden 11 und den Fördertaschen 12 der unteren Förderscheibe 9 ganz bzw. weitestgehend übereinstimmen.

In einem weiteren Abstand 26 über der Förderscheibe 23, der in der Größenordnung annähernd dem Abstand 22 entspricht, ist eine koaxial zu dieser angeordnete und gemeinsam mit ihr rotierende dritte obere Förderscheibe 27 angebracht, die gleichmäßig an ihrem Umfang verteilte Mitnehmer 28 und dazwischen liegende Fördertaschen 29 aufweist. Die Anzahl der Mitnehmer 28 ist genau so groß wie die Anzahl der Förderzinken 24 in der Förderscheibe 23 und die der Greifschneiden 11. Sie unterscheiden sich jedoch von diesen in der Kontur, da sie trapezförmig ausgebildet sind.

Die Greifschneiden 11 der unteren Förderscheibe 9, die Förderzinken 24 der Förderscheibe 23 und die Mitnehmer 28 der oberen Förderscheibe 27 sind in ihrer vertikalen Ausrichtung nur nahezu übereinander angeordnet, da sie in dieser Reihenfolge auf ihre Drehrichtung bezogen zueinander nacheilend versetzt im Raum stehen.

## Patentansprüche

1. Schneid- und Fördervorrichtung für ein reihenunabhängig arbeitendes Schneidwerk für stängeliges Halmgut, insbesondere Mais, mit einer unteren Schneidscheibe und mehreren darüber in koaxialer Ausrichtung zu dieser angeordneten und um eine annähernd vertikal ausgerichtete Achse rotierenden Förderscheiben, deren äußerer Umfang mit Förderzinken besetzt ist und wo sich zwischen den benachbarten Förderzinken Fördertaschen befinden,
wobei
a) die Schneidscheibe (6) im Schneidwerk (1) lagefixiert befestigt ist,
b) direkt über der Schneidscheibe (6) und im Abstand eines Schneidspaltes zu ihr eine untere Förderscheibe (9) angeordnet ist, die um den Mittelpunkt (8) der Schneidscheibe (6) drehbar aufgehängt ist,
c) die Förderzinken (10) der unteren Förderscheibe (9) als gleichmäßig an ihrem Umfang verteilte Greifschneiden (11) ausgebildet sind, die den Außendurchmesser der Schneidscheibe (6) überragen,
d) die Greifschneiden (11) der unteren Förderscheibe (9) so in deren Drehrichtung weisend ausgebildet sind, dass sie in radialer Richtung der unteren Förderscheibe (9) gesehen die auf ihre Drehrichtung bezogenen jeweils vor ihnen liegenden Fördertaschen (12) verdecken,
e) die Öffnungen (13) der Fördertaschen (12) etwa in Drehrichtung der unteren Förderscheibe (9) zeigen,
f) sich in einem bestimmten Abstand (22) über der unteren Förderscheibe (9) wenigstens eine gemeinsam mit dieser rotierende weitere Förderscheibe (23) befindet, deren Förderzinken (24) und Fördertaschen (25) in der Kontur und der Anordnung mit den Greifschneiden (11) und den Fördertaschen (12) der unteren Förderscheibe (9) ganz bzw. weitestgehend übereinstimmen.

2. Schneid- und Fördervorrichtung nach Anspruch 1, **dadurch gekennzeichnet, dass** die Schneide (7) der Schneidscheibe (6) eine profilierte bzw. eine sägezahnartige Gestalt aufweist.

3. Schneid- und Fördervorrichtung nach den Ansprüchen 1 und 2, **dadurch gekennzeichnet, dass** auf den fördernden Flanken (14) der Greifschneiden (11) und somit den Konturen der Fördertaschen (12) in diesem Abschnitt folgende aufrecht stehende Bleche (15) befestigt sind.

4. Schneid- und Fördervorrichtung nach den Ansprüchen 1 bis 3, **dadurch gekennzeichnet, dass** entlang der Oberkanten der aufrecht stehenden Bleche (15) parallel zur Schneidscheibe (6) ausgerichtete Hakenbleche (16) so angebracht sind, dass deren mit Haken (17) besetzte Kanten den Konturen der nicht fördernden Flanken (18) der Greifschneiden (11) im Bereich vom Grund (19) der Fördertaschen (12) bis etwa zur Schneide (7) der Schneidscheibe (6) reichend folgen.

5. Schneid- und Fördervorrichtung nach den Ansprüchen 1 bis 4, **dadurch gekennzeichnet, dass** am Grund (19) der Fördertaschen (12) der unteren Förderscheibe (9) ein zylinderförmiger Mantel (20) aufrecht stehend auf der unteren Förderscheibe (9) angeordnet ist, dessen Radius bis zu den inneren Kanten (21) der Bleche (15) reicht, der sich in der Höhe wenigstens bis zur Oberkante der Bleche (15) erstreckt und der in seiner oberen Ebene geschlossen ist.

6. Schneid- und Fördervorrichtung nach den Ansprüchen 1 bis 5, **dadurch gekennzeichnet, dass** sich in einem bestimmten Abstand (26) über der Förderscheibe (23) eine gemeinsam mit dieser rotierende obere Förderscheibe (27) befindet, die gleichmäßig an ihrem Umfang verteilte Mitnehmer (28) und dazwischen liegende Fördertaschen (29) aufweist, wobei die Anzahl der Mitnehmer (28) mit der Anzahl der Förderzinken (24) der Förderscheibe (23) und damit auch mit der Anzahl der Greifschneiden (11) übereinstimmt.

7. Schneid- und Fördervorrichtung nach den Ansprüchen 1 bis 6, **dadurch gekennzeichnet, dass** die Greifschneiden (11), die Förderzinken (24) und die Mitnehmer (28) in der vertikalen Ausrichtung nahezu übereinander angeordnet sind, wobei sie jedoch in dieser Reihenfolge auf ihre Drehrichtung bezogen zueinander nacheilend angeordnet sind.

8. Schneid- und Fördervorrichtung nach den Ansprüchen 1, 6 und 7, **dadurch gekennzeichnet, dass** die Mitnehmer (28) eine trapezförmige Gestalt haben.

## Claims

1. Cutting and transporting device for a cutting mechanism independent of rows for stalked feedstuff, particularly maize, with a lower cutting disc and several transport discs above it, coaxially aligned with it and rotating about an approximately vertically-aligned axis, the outer circumference of which is fitted with transport prongs and on which transport pockets are located between the adjacent transport prongs, in which:
a) the cutting disc (6) is held in position in the cutting mechanism (1);
b) a lower transport disc (9) is located directly above the cutting disc (6) at a distance equal to one cutting gap from it and suspended so that it will rotate about the centre (8) of the cutting disc (6);
c) the transport prongs (10) of the lower transport disc (9) take the form of gripping blades (11) evenly distributed around its circumference and protruding beyond the external diameter of the cutting disc (6);
d) the gripping blades (11) of the lower transport disc (9) are formed to point in their direction of rotation so that, seen in the radial direction of the lower transport disc (9), they cover the transport pockets (12) lying in front of them in their respective direction of rotation;
e) the apertures (13) of the transport pockets (12) lie in the approximate direction of the lower transport disc (9);
f) at least one further transport disc (23) is located at a certain distance (22) above the lower transport disc (9) and co-rotating with it, the outline and arrangement of the transport prongs (24) and transport pockets (25) of which completely or largely match those of the gripping blades (11) and the transport pockets (12) of the lower transport disc.

2. Cutting and transporting device in accordance with claim 1, **characterised in that** the blade (7) of the cutting disc (6) has a shaped or saw-tooth design.

3. Cutting and transporting device in accordance with claims 1 and 2, **characterised in that** upright plates (15) are mounted on the transporting flanks (14) of the gripping blades (11), thus following the outlines of the transport pockets (12) in this section.

4. Cutting and transporting device in accordance with claims 1 to 3, **characterised in that** hook plates (16) are fitted along the upper edge of the upright plates (15) in parallel to the cutting disc (6) so that their edges fitted with hooks (17) follow the outlines of the non-transporting flanks (18) of the gripping blades (11) extending approximately as far as the blade (7) of the cutting disc (6) in the vicinity of the base (19) of the transport pockets (12).

5. Cutting and transporting device in accordance with claims 1 to 4, **characterised in that** a cylindrical shroud (20) is mounted on the base (19) of the transport pockets (12) of the lower transport disc (9) standing upright on the lower transport disc (9), the radius of which shroud (20) extends to the inner edges (21) of the plates (15) and the height of which extends at least to the upper edge of the plates (15) and the upper plane of which is dosed.

6. Cutting and transporting device in accordance with daims 1 to 5, **characterised in that** an upper transport disc (27) is located at a certain distance (26) above the transport disc (23) co-rotating with it, which has dogs (28) evenly distributed around its circumference and transport pockets (29) lying between them, in which the number of dogs (28) is identical to the number of transport prongs (24) of the transport disc (23) and thus to the number of gripping blades (11).

7. Cutting and transport device in accordance with claims 1 to 6, **characterised in that** the gripping blades (11), the transport prongs (24) and the dogs (28) are vertically aligned so that they are almost above each other, whereby, however, they are offset to the rear in this order in relation to their direction of rotation.

8. Cutting and transporting device in accordance with claims 1, 6 and 7, **characterised in that** the dogs (28) have a trapezoidal form.

## Revendications

1. Dispositif de coupe et de transport pour un mécanisme de coupe fonctionnant indépendamment des lignes pour des céréales à tiges, en particulier du maïs, avec un disque de coupe inférieur et plusieurs disques de transport disposés par dessus dans un agencement coaxial par rapport à celui-ci et des disques de transport tournant autour d'un axe orienté de manière à peu près verticale dont le pourtour extérieur est occupé par des dents de transport et où, entre les dents de transport voisines, on trouve des poches de transport, dans lequel
a) le disque de coupe (6) est fixé à demeure dans le mécanisme de coupe (1),
b) directement au-dessus du disque de coupe (6) et à distance d'un intervalle de coupe par rapport à celui-ci, un disque de coupe inférieur (9) est agencé qui est suspendu de manière à tourner autour du centre (8) du disque de coupe (6),
c) les dents de transport (10) du disque de transport inférieur (8) sont formées comme des lames preneuses distribuées uniformément sur leur périphérie et qui dépassent le diamètre extérieur du disque de coupe (6),
d) les lames preneuses (11) du disque de transport inférieur (9) sont orientées telle dans le sens de rotation du disque de transport inférieur (9) de manière à ce qu'elles recouvrent les poches de transport (12) considérées dans le sens radial du disque de transport inférieur (9) qui se trouvent devant elles par rapport à leur sens de rotation,
e) les ouvertures (13) des poches de transport (12) sont orientées pratiquement dans le sens de rotation du disque de transport inférieur (9),
f) on trouve, à une certaine distance (22) au-dessus du disque de transport inférieur (9) au moins un autre disque de transport (23) tournant avec celui-ci dont les dents de transport (24) et les poches de transport (25) ont un contour et une disposition qui correspondent totalement ou largement avec les dents preneuses (11) et les poches de transport (12) du disque de transport inférieur (9).

2. Dispositif de coupe et de transport selon la revendication 1, **caractérisé en ce que** le tranchant (7) du disque de coupe (6) présente une forme profilée ou en dents de scie.

3. Dispositif de coupe et de transport selon les revendications 1 et 2, **caractérisé en ce que** sur les flancs de transport (14) des lames preneuses (11) et, donc, les contours des poches de transport (12), des tôles (15) disposées de manière verticale dans cette section sont fixées.

4. Dispositif de coupe et de transport selon les revendications 1 à 3, **caractérisé en ce que** le long des bords supérieurs des tôles (15) dressées verticalement, des tôles à crochets (16) orientées parallèlement au disque de coupe (6) sont montées de manière à ce que leurs bords occupés par des crochets (17) suivent suffisamment les contours des flancs non transporteurs (18) des lames preneuses (11) dans la zone du fond (19) des poches de transport (12) jusqu'à environ le tranchant (7) du disque de coupe (6).

5. Dispositif de coupe et de transport selon les revendications 1 à 4, **caractérisé en ce que** sur le fond (19) des poches de transport (12) du disque de transport inférieur (9), une enveloppe cylindrique (20) est disposée étant redressée sur le disque de transport inférieur (9), dont le rayon va jusqu'aux bords intérieurs (21) des tôles (15) qui s'étendent en hauteur jusqu'au moins la face supérieure des tôles (15) et qui est fermé au niveau de son plan supérieur.

6. Dispositif de coupe et de transport selon les revendications 1 à 5, **caractérisé en ce qu'**à une distance déterminée (26) au-dessus du disque de transport (27),on trouve un disque de transport supérieur (27) tournant avec celui-ci, qui présente des entraîneurs (28) distribués uniformément sur son pourtour et des poches de transport (29) intermédiaires, le nombre d'entraîneurs (28) correspondant au nombre de dents de transport (24) du disque de transport (23) et donc aussi au nombre de lames preneuses (11).

7. Dispositif de coupe et de transport selon les revendications 1 à 6, **caractérisé en ce que** les lames preneuses (11), les dents de transport (24) et les entraîneurs (28) sont disposés pratiquement les uns au-dessus des autres dans le sens vertical, étant disposés de manière décalée l'un par rapport à l'autre dans cet ordre par rapport à leur sens de rotation.

8. Dispositif de coupe et de transport selon les revendications 1, 6 et 7, **caractérisé en ce que** les entraîneurs (28) présentent une forme trapézoïdale.
